Europäisches Patentamt

European Patent Office

Office européen des brevets

(11) Publication number: **0 168 712**
A1

# (12) EUROPEAN PATENT APPLICATION

(21) Application number: 85108194.3

(22) Date of filing: 02.07.85

(51) Int. Cl.⁴: **H 02 K 53/00, H 02 N 11/00**

(30) Priority: 16.07.84 IT 2190384

(43) Date of publication of application: 22.01.86
Bulletin 86/4

(84) Designated Contracting States: **AT BE CH DE FR GB LI LU NL SE**

(71) Applicant: **Rebolini, Giorgio, Piazza Tevere, 16 S. Donato Milanese, I-20097 Milano (IT)**

(72) Inventor: **Rebolini, Giorgio, Piazza Tevere, 16 S. Donato Milanese, I-20097 Milano (IT)**

(74) Representative: **Notarbartolo, Manfredi et al, Studio Brevetti e Marchi NOTARBARTOLO & GERVASI Viale Bianca Maria, 33, I-20122 Milano (IT)**

(54) **Rotary permanent magnet motor.**

(57) A rotary permanent magnet motor comprising a main rotor (53), a series of auxiliary rotors (56) and a magnetic band (68, 69, 68', 69'), said auxiliary rotors (56) and said magnetic band (68, 69, 68', 69') being divided into radial magnetic sectors arranged to be points of thrust or attraction by means of which the rolling of said auxiliary rollers (56) on the magnetic band (68, 69, 68', 69'), on the inside or outside of it, is effected by utilising the lead or lag between the magnets of the band (68, 69, 68', 69') and those (70, 71) of the auxiliary rotors (56), thus determining the axial rotation of the main rotor (53), the barycentre of reaction of said auxiliary rotors (56) passing external or internal to the barycentre of the magnets (68, 69, 68', 69'), said motor being of cylindrical, frusto-conical or other shape.

– 1 –

## ROTARY PERMANENT MAGNET MOTOR

This invention relates to a rotary permanent magnet motor. More particularly, the invention relates to a rotary permanent magnet motor comprising a main rotor, a series of auxiliary rotors and a magnetic band, and which is of such configuration and characteristics as to give it considerable advantages over motors of the known art.

Any known motor, whether of the explosion electric or any other type, needs a continuous supply of energy for its operation, this being in the form of fuel, electrical energy etc.

The provision of this supply involves high cost in terms of labour, research, transformation, transportation etc., and there is also substantial deterioration of the motor itself.

The motor according to the invention operates exclusively by means of permanent magnets and has no need for a continuous energy supply, and thus constitutes a perfect energy producer which obviates all the aforesaid costs and deterioration.

For example, for the present-day alternating current or direct current electric motors to operate, they have to be supplied with electric current which is converted in the motor into the mechanical energy required for driving a machine.

Appropriate equipment receives the mains current and, by means of a series of transformers and relays, feeds the motor with the most appropriate voltage for its starting, stopping, acceleration, braking of reversal of motion.

Such equipment, in order to be able to operate properly, must be enclosed and protected from the external environment, and is periodically overhauled, with the result that it is very costly.

Moreover, electrical energy is not available everywhere. This means that a motor can be required which operates with characteristics similar to those of an electric motor even when electrical energy is unvailable.

Electricity generating sets satisfy these requirements by using internal combustion engines, but are too noisy.

The present invention obviates the aforesaid drawbacks and provides other considerable advantages as illustrated hereinafter.

The rotary permanent magnet motor according to the present invention is characterised by comprising a main rotor, a series of auxiliary rotors and a magnetic band, said auxiliary rotors and said magnetic band being divided into radial magnetic sectors arranged to be points of thrust or of attraction by which the rolling of said auxiliary rotors on the magnetic band, on the inside or outside of it, is effected by utilising the lead or lag between the magnets of the band and those of the auxiliary rotors, thus determining the axial rotation of the main rotor, the barycentre of reaction of said auxiliary rotors passing external or internal to the barycentre of the magnets, said motor being of cylindrical, frusto-conical or other shape.

By means of equal arms, said main rotor supports, at equal angular
distance apart, said cylindrical or frusto-conical auxiliary rotors,
each composed of radial sectors of even number formed from permanent
magnets disposed in a chequered arrangement of alternate opposite
polarity, said auxiliary rotors being disposed internal or external
to said cylindrical or frusto-conical magnetic band, which is likewise
composed of a series of radial sectors of even number formed from
permanent magnets alternately of opposite polarity.

The rotors are linked together and to the fixed casing of the motor
so that the rotation of the main rotor takes place by the effect
of the motion of each auxiliary rotor, almost equivalent to the
rolling motion on the cylindrical surface of the magnetic band,
either on the inside or on the outside of it.

Consequently, by the effect of the repulsion and attraction forces
between the two opposing magnets of the rotors and band, of equal
and different polarity respectively, each auxiliary rotor, encoun-
tering supporting reaction by way of its pinion, rotates about
itself and translates relative to the band, to cause the main rotor
to undergo axial rotation.

Each rotor is connected to the other rotors by way of planet gears
rigid with their shafts and an endless chain, or by a sun gear
which engages with said planet gears or by other equivalent linkages.

At least one of the cylindrical auxiliary rotors is connected to the
fixed casing supporting the transmission shaft by an endless chain
which engages both with a gear wheel rigid with the rotor shaft and
with a ring gear rigid with the casing and coaxial to the main rotor.
The transmission ratio is equivalent to the ratio of the rotor
diameters to the magnetic band diameter.

The magnetic band can be located in any angular position with respect to the main rotor assembly with wich the shafts of the auxiliary rotors are rigid, which enables the positive or negative magnets of the band to be positioned at will opposite the positive magnets of the auxiliary rotors or vice versa, ie with the magnets mutually centered or in any intermediate offset position between the various centered positions.

The magnetic band is moved by a suitable external lever or equivalent means.

On locating the centre of a positive magnet of the band in correspondence with the joining zone between two positive and negative side-by-side magnets of each auxiliary rotor so that for a person observing the cross-section through the motor the positive is to the left of the radius which geometrically connects the rotor centre to the centre of the magnet of the band, or in an equivalent position, the rotor is pulled in a left-handed direction by the effect of the repulsion of its positive magnet and the attraction of its negative magnet, to drive the main rotor with right-handed motion. By rotating the lever until the centre of a positive magnet of each auxiliary rotor comes into correspondence with the commencement of a positive magnet of the magnetic band, said positive rotor magnet is repelled by the positive magnet of the band disposed on its right and is simultaneously attracted by the negative magnet disposed on its left with the effect that the auxiliary rotors accelerate in a left-handed direction and thus the main rotor accelerates in a right-handed direction.

With the motor at rest, on rotating the lever so as to move a positive magnet of the band towards the left, the positive magnet of each auxiliary rotor is simultaneaously attracted by the negative magnet of the band which is disposed to its right and is repelled by the positive magnet thereof which is disposed to its left.

In this manner, a force arises in the right-handed direction of each rotor and thus in the left-handed direction of the transmission shaft, with the effect of progressive acceleration at choice, and thus also motion reversal.

If the magnetic band is released, and thus the auxiliary rotors and the entire motor become free, the motor and rotors automatically become disposed in a position of attraction alone, and thus the motor will stop.

The characteristics and objects of the invention will be more apparent from the embodiments given hereinafter and illustrated by diagrammatic figures, which relate to preferred methods of implementing the invention and are given by way of non-limiting example.

Example of a cylindrical-rotor embodiment

Figure 1: Overall view of permanent magnet motor

Figure 2: Plan view of magnet arrangement

Figure 3: Right-handed rotation of transmission shaft

Figure 4: Right-handed acceleration

Figure 5: Left-handed rotation

Figure 6: Motor at rest

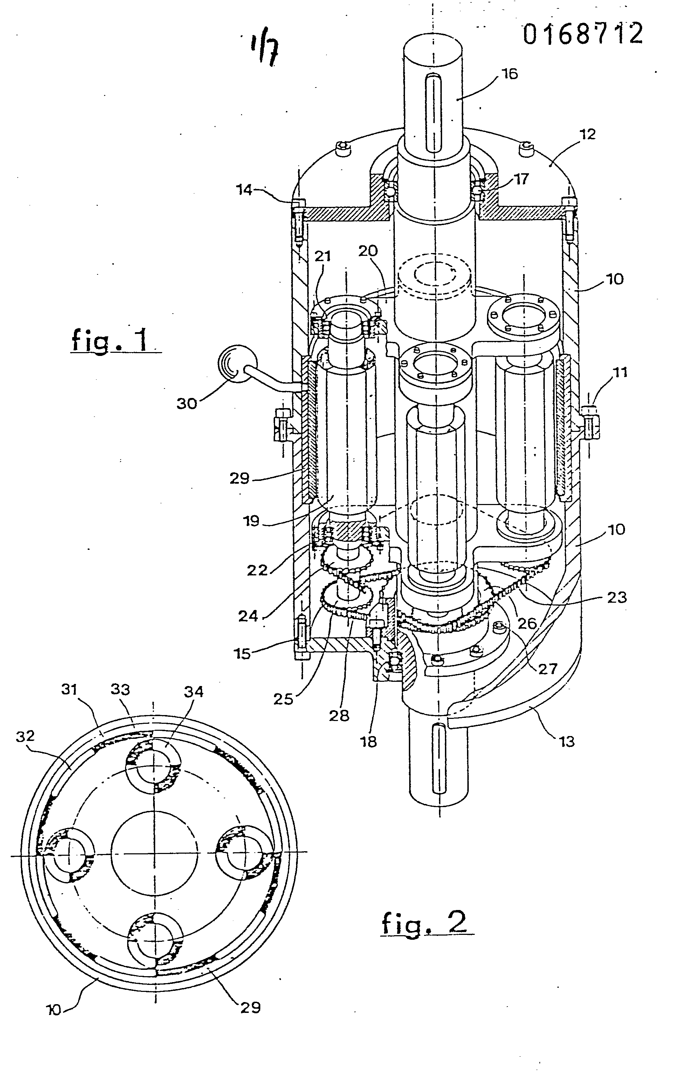

The magnet motor comprises a stator 10, composed of two halves joined together by a series of circumferential screws 11, two end covers 12, 13 fixed to the stator by a series of screws 14, 15, a central transmission shaft or main rotor 16 mounted on bearings 17, 18, and one or more auxiliary rotors 19 mounted on support arms 20 and rotating on bearings 21, 22 (Figure 1).

The auxiliary rotor shafts are mechanically connected together at one end by a chain 23, by way of the sprocket pinions 24 keyed on to each auxiliary rotor.

One of these rotors carries a supplementary sprocket pinion 25 which by means of the chain 28 is connected to the ring gear 26, which is fixed to the cover 13 by screws 27.

The magnet holding ring 29 is set into the centre of the stator, it being controlled from the outside by the lever 30.

The magnet holding ring carries internally a series of permanent magnets 31 of positive polarity spaced apart by a series of permanent magnets 32 of negative polarity (Figure 2), to thus constitute a magnetic band.

Each of the auxiliary rotors also carries a series of magnets of positive polarity 33 spaced apart by a series of magnets of negative polarity 34.

The width and length of the positive polarity magnets is equal to those of the negative polarity magnets, and the width and length of the magnets disposed on the stator correspond to those of the magnets fitted on to each auxiliary rotor.

The number of magnets fitted to the stator and the number of magnets mounted on each auxiliary rotor are determined in accordance with the motor size and power.

In the embodiment, the chains 23, 28 can be replaced by toothed belts or gears. In this latter case however, an idle gear must be interposed so that the directions of rotation are correct, as described hereinafter.

0168712

The chain, belt or gear distribution system can be fitted to either end of the motor.

Various cases or stages of operation can be distinguished, according to the position which the ring 29 assumes relative to the auxiliary rotors.

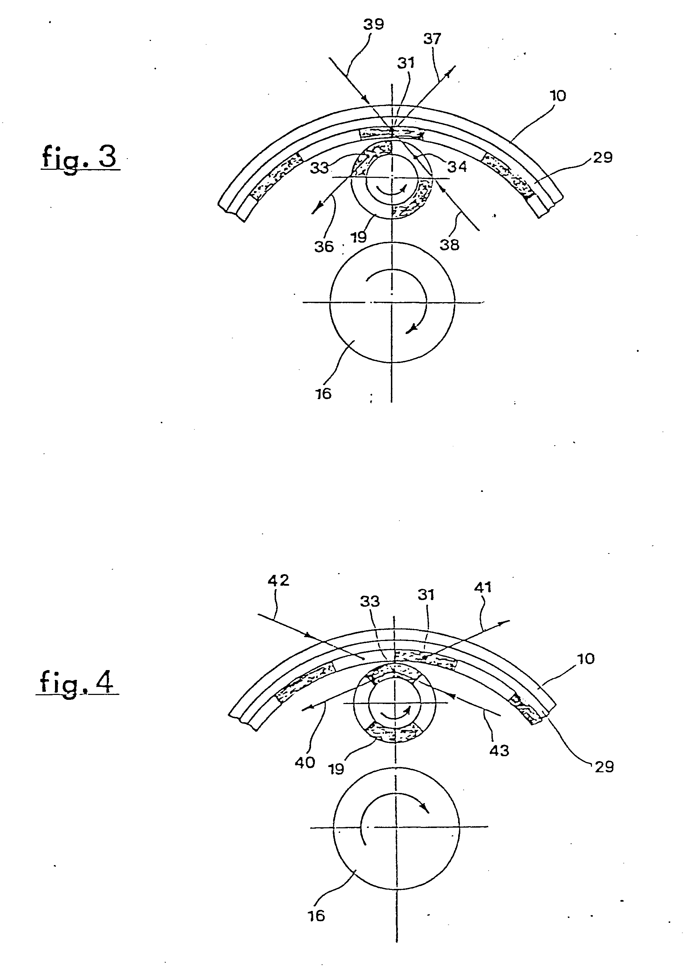

1st case)  Right-handed rotation of the main shaft or rotor, with the barycentre of reaction internal to the barycentre of the magnets (Figure 3).

The lever 30 which causes the ring 29 to rotate relative to the stator 10 is turned manually or by automatic means.

If the positive magnet 31 is disposed exactly at the centre of the two magnets 33 and 34, the one positive and the other negative, the effect is that the main rotor rotates right-handed because the force 36 applied at the barycentre of the positive magnet 33 opposes the force 37 applied at the barycentre of the magnet 31.  This is because these are forces expressed by magnets of equal polarity.

To this effect must be added the force 38 applied at the barycentre of the positive magnet 34, which is attracted by the force 39 originating from the barycentre of the magnet 31, these being forces expressed by magnets of opposing polarity.

Diametrically opposite the considered auxiliary rotor there is a further rotor which determines the same effects.

This produces about the main rotation shaft 167 a left-handed rotation couple which, by reacting against the ring gear 26, causes the arms 20 to rotate in the right-handed direction to also drag the main rotor 16 in the same direction.

2nd case )   Right-handed acceleration of the main motor, with the barycentre of reaction internal to the barycentre of the magnets (Figure 4).

By rotating the ring 29 until the centre of the positive magnet of the rotor 33 comes into correspondence with the commencement of the positive magnet 31 disposed on the stator, and by virtue of the preceding considerations, the following takes place:  the force 40 expressed by the positive magnet 33 opposes the force 41 expressed by the magnet of equal polarity 31; the force 43 of the positive magnet 33 remains attracted by the magnet of reverse polarity which develops the force 42, so that the auxiliary rotor 19 accelerates its rotation in the left-handed direction, while the main rotor 16 accelerates its rotation in the right-handed direction.

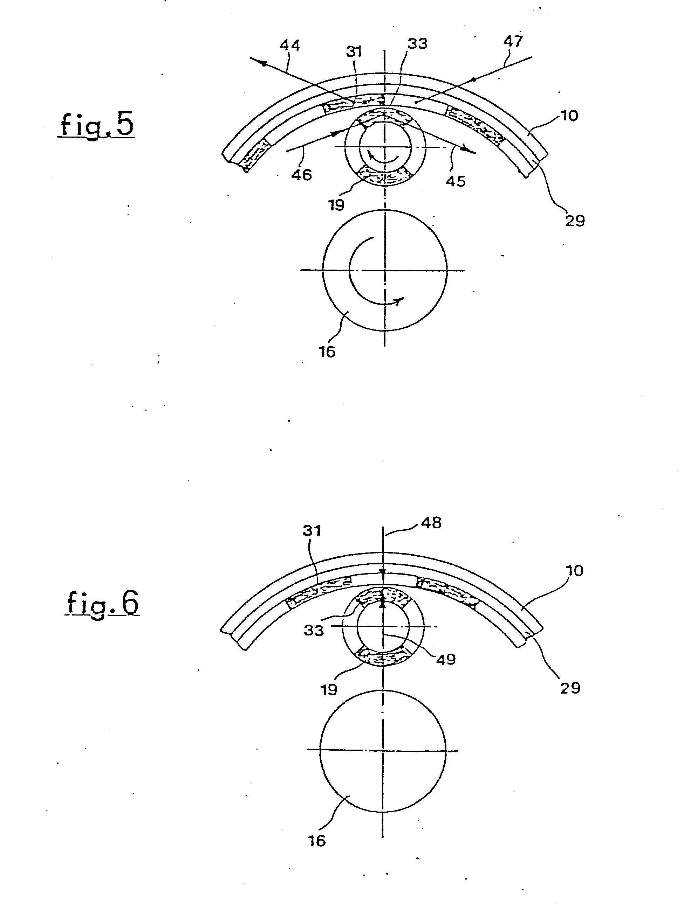

3rd  case)  Left-handed rotation of the main rotor, with barycentre of reaction internal to the barycentre of the magnets (Figure 5).

If  the centre of the positive magnet 33 situated on the auxiliary rotor 19 is made to correspond with  the other end of the positive magnet 31 mounted on the stator, the force 44 opposes the force 45, and the force 46 remains attracted by the force 47, the effect being a right-handed rotation of the auxiliary rotors 19, and a corresponding left-handed rotation of the main rotor 16.

4th  case)   Motor at rest (Figure 6).
If a magnet situated on the stator ring 29 is centered with another magnet of opposite polarity mounted on the auxiliary rotor, there is a balancing of attracting forces 48 and 49, which cause stoppage of the main rotor 16 with respect to the auxiliary rotor 19, halting any movement.

Example of a frusto-conical rotor embodiment

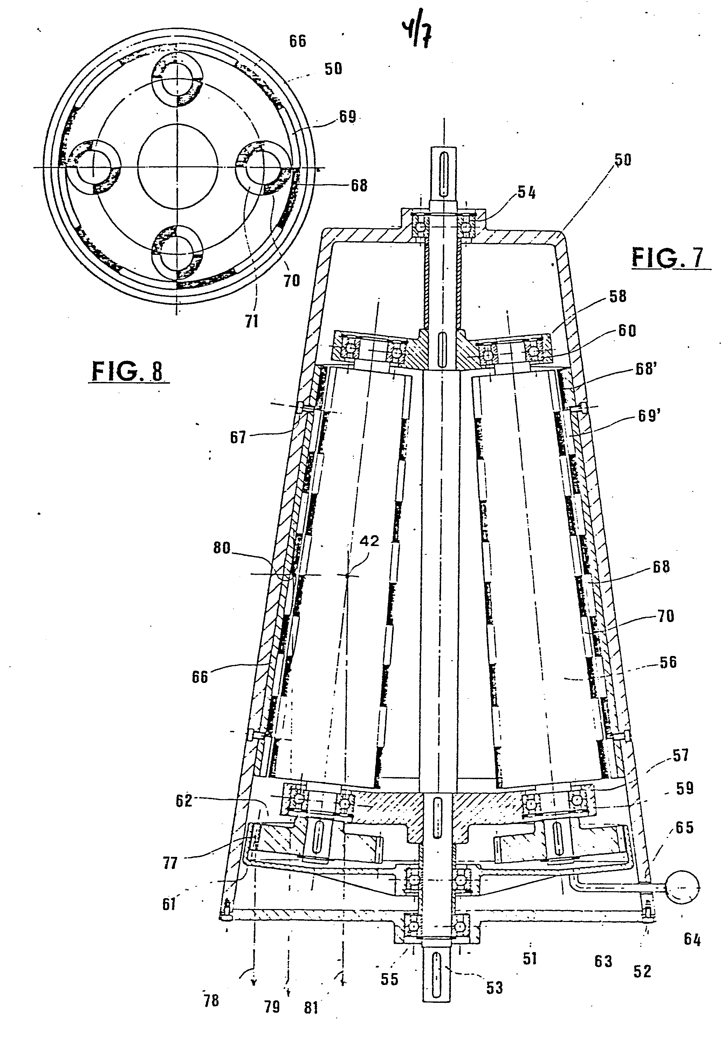

Figure 7:   Overall view of permanent magnet motor with motion distribution at the major conical end

Figure 8:   Plan view of magnet arrangement

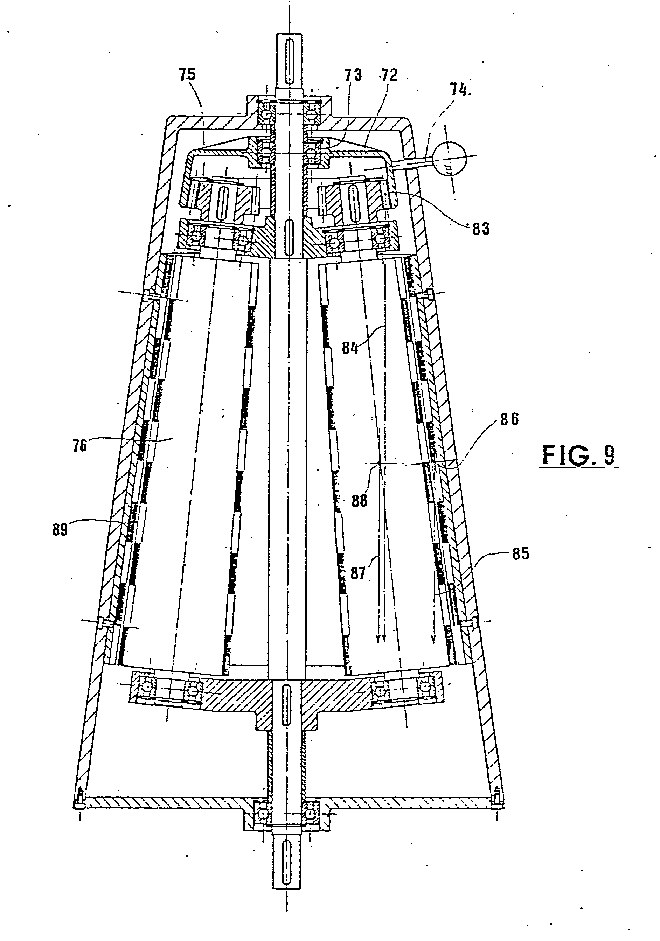

Figure 9:   Overall view of permanent magnet motor with motion distribution at the minor conical end

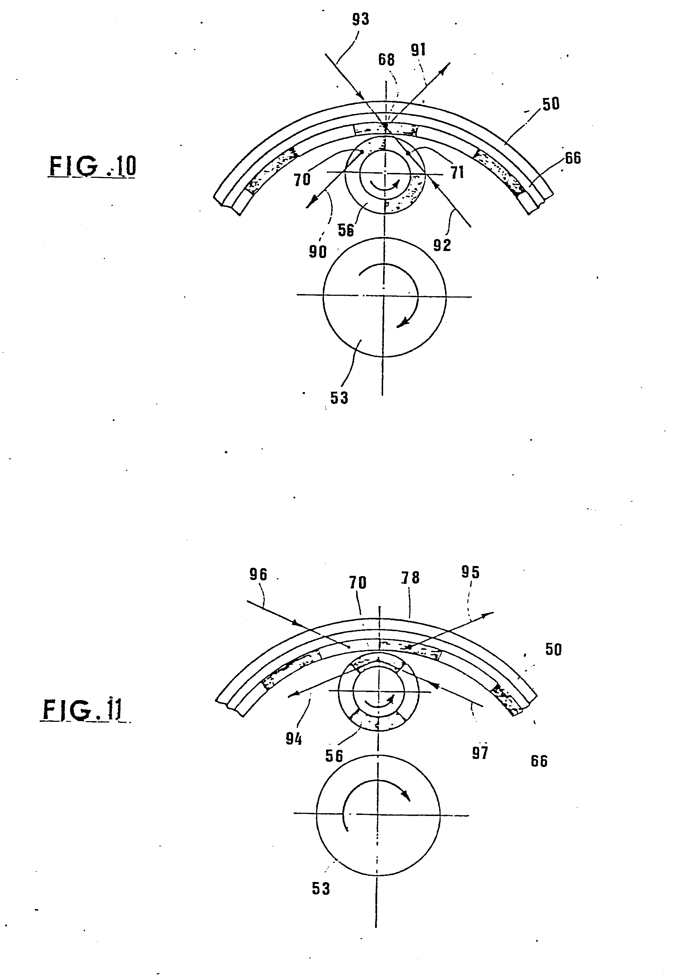

Figure 10:   Right-handed rotation of output shaft

Figure 11:   Right-handed acceleration

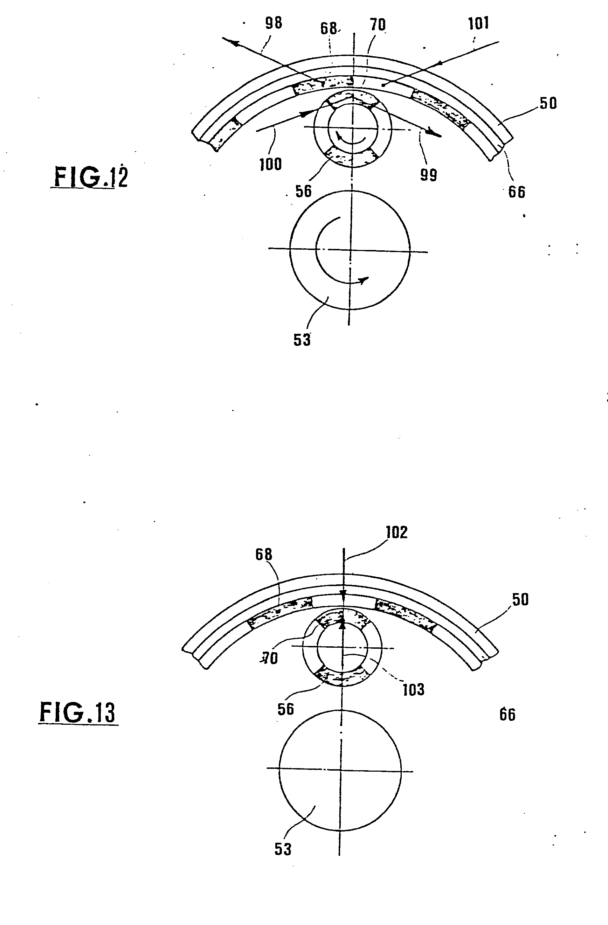

Figure 12:   Left-handed rotation

Figure 13:   Motor at rest.

The magnet motor comprises a conical stator 50 closed at one end by the cover 51, which is joined to the stator by a series of circumferential screws 52.

At its centre, a transmission shaft or main rotor 53, mounted on bearings 54, 55, supports one or more auxiliary rotors 56 mounted on support arms 57, 58 and rotating on bearings 59, 60 (Figure 7).

The auxiliary rotor shafts are connected mechanically together at one end by a sun gear with internal conical toothing 61, by way of the bevel pinions 62 keyed on to each auxiliary rotor.

An external lever 63 with a grip 64 emerging from the cavity 65 formed in the stator 50 is rigidly connected to the gear 61.

At the centre of the stator there is mounted the conical magnet holding ring 66, which is fixed to the stator by screws 67.

On its inside, the magnet holding ring rigidly carries a series of permanent magnets 68 of positive polarity spaces apart by a series of permanent magnets 69 of negative polarity (Figure 8).

The magnet arrangement is of the chequered type, ie below a first row 68' of positive and negative magnets disposed alternately on the circumference, there is an underlying row 69' of magnets which are offset by one polarity.

Each of the auxiliary rotors also carries a series of positive polarity magnets 70 spaced apart by a series of negative polarity magnets 71, these also being disposed chequered as on the stator.

The width and length of the positive polarity magnets is equal to those of the negative polarity magnets, both in the case of those fitted to the stator and in the case of those fitted to the auxiliary rotors.

The number of magnets fitted to the stator and the number of magnets mounted on each auxiliary rotor is determined according to the motor size and its power.

In the ambodiment, the gear 61 and bevel pinions 62 can be replaced by toothed belts or chains. In these latter cases, care must be taken to make the directions of rotation correct, as described hereinafter.

The chain, belt or gear distribution system can be fitted to either end of the motor. For example in Figure 9, the linkage is housed in the lower taper of the stator. In practice, the components of the distribution system can be located in any position in which the three forces, namely the attraction, reaction and yielding force are separated from each other and are at different distances from the transmission shaft.

Figure 9 shows the sun gear 72 mounted on the bearing 13 and controlled by the external lever 74, and the bevel planet pinions 75 which cause the conical rotors 76 to rotate.  The other elements are equal to those shown in Figure 7.

In Figure 7, the point of application of the tangential force 78 (also known as the point of reaction)  is external to the vertical straight line 79 passing through the barycentre of the stator magnets 80 and to the vertical straight line 81 passing through the barycentre of the rotor 82.

In contrast, in Figure 9 the point of application 83 of the force 84 is intermediate between the vertical straight line 85 passing through the barycentre of the stator magnets 86 and the vertical straight line 87 passing through the barycentre of the rotor 88.

Between the stator magnets and rotor magnets there is a small gap 89 known as the air gap.

Different operational cases or stages can be distinghished, according to the position assumed by the rotor 56 relative to the magnetic band fixed on the ring 66.

1st  case)   Right-handed rotation of the main  shaft or rotor with the barycentre of reaction internal to the barycentre of the magnets (Figure 10).

The lever 63 which causes the sun gear 61 to rotate relative to the stator 50 is turned manually or by automatic means.

If the positive magnet 68 is set exactly at the centre of the two magnets 70, 71, the one positive and the other negative, the effect is a right-handed rotation  of the main rotor because the force 90 applied at the barycentre of the positive magnet 70 opposes the force 91 applied at the abrycentre of the magnet 68, these being forces expressed by magnets of equal polarity.

To this effect must be added the force 92 applied at the barycentre of the positive magnet 71, which is attracted by the force 93 originating from the barycentre of the magnet 68, these being forces expressed by magnets of opposite polarity.

Diametrically opposite the considered auxiliary rotor there is another which determines the same effects.

This produces about the main rotation shaft 53 a right-handed rotation couple which, reacting against the gear 61, causes the arms 57, 58 to rotate in a right-handed direction, and drag the main rotor 53 in the same direction.

2nd case)  Right-handed acceleration of the main rotor with barycentre of reaction internal to the barycentre of the magnets (Figure 11).

On rotating the lever 63 until the centre of the positive magnet of the rotor 70 comes into correspondence with the commencement of the positive magnet 68 disposed on the stator, and by the effect of the preceding considerations, the following occurs:  the force 94 expressed by the positive magnet 70 opposes the force 95 expressed by the magnet of equal polarity 68; the force 97 of the positive magnet 70 remains attracted by the magnet of reverse polarity which develops the force 96, so that the auxiliary rotor 56 accelerates its rotation in the left-handed direction, while the main rotor 53 accelerates its rotation in the right-handed direction.

3rd case)  Left-handed rotation of the main motor with the barycentre of reaction internal to the barycentre of the magnets (Figure 12).

If the centre of the positive magnet 70 situated on the auxiliary rotor 56 is made to coincide with the other end of the positive magnet 68 mounted on the stator, the force 98 opposes the force 99 and the force 100 remains attracted by the force 101, the effect of which is that the auxiliary rotors 56 undergo right-handed rotation, with corresponding left-handed rotation of the main rotor 53.

4th case) Motor at rest (Figure 13).

By centering a magnet situated on the stator ring 66 with another magnet of opposite polarity mounted on the auxiliary rotor, there is balance between the attractive forces 102 and 103, to determine stoppage of the main rotor 53 relative to the auxiliary rotor 56 and halting any movement.

In the described frusto-conical rotor embodiment the stator magnets may be replaced by a crown gear having an internal or an external toothing and the auxiliary rotors magnets may be replaced by fixed gears, mounted on shafts or on springs, which, engaging with the crown gear, replace the thrust and attraction points of the same magnets.

By this way the auxiliary rotors consist only of two gears of different diameter, one of which engages with the planetary crown and the other one engages with the crown gear fixed to the case.

The rotary permanent magnet motor according to the present invention has considerable advantages over motors of the known art, and in particular:
- absence of costly electrical equipment for stopping, reversing or accelerating the rotary motion of the motor;

- absence of traditional primary energy sources such as petroleum derivatives;
- reliable operation even when no electric current is available;
- maintaining of the "phasing" between the auxiliary rotors and the main rotor by using chains or other similar linkages;
- noiselessness and therefore applicability to various technical fields which require environments comfortable to man; mechanical transmission characteristics exceeding those of known explosion engines;
- reduced maintenance with limited costs.

As the invention concerned has been described and represented only by way of non-limiting example and to demonstrate its essential characteristics, it can undergo various modifications according to industrial, commercial and other requirements, and include other systems and means, without leaving its scope.

Consequently, the patent application is to be considered as comprising every equivalent application of the concepts and every equivalent product implemented and/or operating in accordance with one or more of the characteristics indicated in the following claims.

Claims

1. A rotary permanent magnet motor comprising a main rotor, a series of auxiliary rotors and a magnetic band, said auxiliary rotors and said magnetic band being divided into radial magnetic sectors arranged to be points of thrust or attraction by means of which the rolling of said auxiliary rotors on the magnetic band, on the inside or outside of it, is effected by utilising the lead or lag between the magnets of the band and those of the auxiliary rotors, thus determining the axial rotation of the main rotor, the barycentre of reaction of said auxiliary rotors passing external or internal to the barycentre of the magnets, said motor being of cylindrical, frusto-conical or other shape.

2. A rotary permanent magnet motor as claimed in claim 1, characterised in that said main rotor supports on equal arms, and at equal angular distances apart, said auxiliary rotors each composed of radial magnetic sectors of even number obtained from permanent magnets alternately of opposite polarity disposed in a chequered arrangement, the distance of each auxiliary rotor from the main rotor being such as to maintain the outer surface of the auxiliary rotors at a minimum distance from the surface of said magnetic band, which is equally composed of a series of radial magnetic sectors of even number obtained from permanent magnets alternately of opposite polarity and disposed in a chequered arrangement, the arcuate surfaces of each magnet both of the auxiliary rotors and of the band being of the same extension, all the rotors being linked together and to the fixed casing of the motor in such a manner that the rotation of the main rotor takes place by the effect of the motion of each auxiliary rotor, which is almost equivalent to its rolling motion on the outer or inner surface of the magnetic band, such that by the effect of the repulsion forces between those opposing magnets of the rotors and band which are of equal polarity and the attraction of those opposing magnets of the rotors and band which are of different polarity, each auxiliary rotor, encountering a supporting reaction by way of its pinion, rotates about itself and translates with respect to the band to determine the axial rotation of the main rotor.

3. A rotary permanent magnet motor as claimed in claim 1, characterised in that each auxiliary rotor is connected to the others by sprocket wheels or bevel planet pionions, rigid with the shafts of said rotors, and an endless chain which engages with said sprocket wheels or an internally or externally toothed bevel gear which engages with said pinions, or by other equivalent linkages.

4. A rotary permanent magnet motor as claimed in claims 1 to 3, characterised in that the magnetic band or the internally or externally toothed gear can be located, with respect to the transmission shaft assembly with which the shafts of the auxiliary rotors are rigid, in any angular position which enables the positive or negative magnets of the band to be positioned at will opposite the positive magnets of the rotors or vice versa, ie with the magnets mutually centered or in any intermediate offset position between the various centered positions, the band being moved by a suitable external lever or equivalent means.

5. A rotary permanent magnet motor as claimed in claims 1 to 4, characterised in that; when the motor is at rest, by rotating the band so as to locate the centre of a positive magnet of the magnetic band in correspondence with the joining zone between two positive and negative side-by-side magnets of each rotor such that for a person observing the cross section through the motor the positive is to the left of the radius which geometrically connects the rotor centre to the centre of the magnet of the band, or in an equivalent position, the rotor is attracted in a left-handed direction by the effect of the repulsion of its positive magnet and the attraction of its negative magnet, but the motor rotates in a left-handed direction if the baricentre of reaction is external to the barycentre of the magnets, and rotates in a right-handed direction if the barycentre of reaction is internal to the barycentre of the magnets.

6. A rotary permanent magnet motor as claimed in claims 1 to 5, characterised in that, with the motor at rest, by rotating the magnetic band so as to locate a positive magnet of the stator to the left of the radius which geometrically connects the centre of each rotor to the zone of contact between one magnet and another of the said stator, the positive magnet of each rotor is simultaneously attracted by the negative magnet of the stator disposed to the right and is repelled by the positive magnet thereof disposed to the left of the aforesaid radius, so urging each auxiliary rotor in the right-handed direction, but the motor rotates in a right-handed direction if the barycentre of reaction is external to the barycentre of the magnets and rotates in a left-handed direction if the barycentre of contact is internal to the barycentre of the magnets.

7. A rotary permanent magnet motor as claimed in claims 1 to 6, characterised in that the components of the distribution system can be disposed in the major conical part of the motor or in the minor conical part or in any position which enables the three forces, namely the attraction, supporting reaction and yielding force, to be separated from each other and to be located at different distances from the transmission shaft.

8. A rotary permanent magnet motor as claimed in claims 1 to 7, in which the point of reaction against the sun gear which determines the orientation of the auxiliary rotors with respect to the stator by means of the external lever is located external to the straight line passing through the barycentre of the magnets and also external to the straight line passing through the barycentre of the auxiliary rotors.

9. A rotary permanent magnet motor as claimed in claims 1 to 8, in which the point of reaction against the sun gear which determines the orientation of the rotors with respect to the stator by means of the external lever is located between the straight line passing through the barycentre of the stator magnets and the straight line passing through the barycentre of the rotor shaft.

10. A rotary motor as claimed in claim 1, characterized in that in the frusto-conical rotor embodiment the magnetic band magnets are replaced by a crown gear having an internal or an external toothing and the auxiliary rotors magnets are replaced by fixed gears, mounted on shafts or on springs, which, engaging with the crown gear, replace the thrust and attraction points of the same magnets.

fig. 1

fig. 2

0168712

1/7

fig. 3

fig. 4

fig.5

fig.6

0168712

4/7

FIG. 8

FIG. 7

0168712

FIG. 9

47

FIG.10

FIG.11

0168712

7/7

**FIG.12**

**FIG.13**

0168712

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 1, no. 37 (E-76)[2158], 18th April 1982; & JP - A - 51 134 810 (SYOJI OGIWARA) 22-11-1976 * Abstract; figures 1,2 * | 1-6,8, 9 | H 02 K 53/00 H 02 N 11/00 |
| X | PATENTS ABSTRACTS OF JAPAN, vol. 6, no. 254 (E-148)[1132], 14th December; & JP - A - 57 153 577 (YOSHITERU YAMAZAKI) 22-09-1982 * Abstract; figures 1-4 * | 1-6,8, 9 | |
| X | PATENTS ABSTRACTS OF JAPAN, vol. 6, no. 254 (E-148)[1132], 14th December 1982; & JP - A - 57 153 576 (YOSHITERU YAMAZAKI) 22-09-1982 * Abstract; figures * | 1-3 | |
| A | EP-A-0 038 120 (HIROE) * Pages 14,15; figures 1-4 * | 1-3 | TECHNICAL FIELDS SEARCHED (Int. Cl.4) H 02 K H 02 N |
| A | DE-C- 902 883 (SCHÖN) * Figures 2,7-9 * | 7,10 | |

The present search report has been drawn up for all claims

| Place of search THE HAGUE | Date of completion of the search 04-10-1985 | Examiner TIO K.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82